# FASCICULE DE BREVET EUROPEEN

(11) **EP 3 588 046 B1**
(45) Date de publication et mention de la délivrance du brevet: **11.11.2020**
(21) Numéro de dépôt: 19181890.5
(22) Date de dépôt: 24.06.2019
(51) Int. Cl.: G01M 3/20

(54) **INSTALLATION ET ENSEMBLE POUR LA DÉTECTION DE FUITES D'UNE MEMBRANE D'ÉTANCHÉITÉ D'UN OUVRAGE**
ANLAGE UND EINHEIT FÜR DIE DETEKTION VON LECKS EINER ABDICHTFOLIE EINES BAUWERKS
INSTALLATION AND ASSEMBLY FOR DETECTING LEAKS FROM A SEALING MEMBRANE OF A STRUCTURE

(30) Priorité: 28.06.2018 FR 1855888
(43) Date de publication de la demande: 01.01.2020
(73) Titulaire: Communier, Xavier, 37160 La Calle Saint Avant (FR)
(72) Inventeur: Communier, Xavier, 37160 La Calle Saint Avant (FR)
(74) Mandataire: Gicquel, Frédéric

(56) Documents cités:
- EP-A1- 0 933 628
- EP-A2- 0 157 759
- DE-C- 619 711
- DE-C1- 3 331 486
- DE-U1- 8 902 256
- GB-A- 2 263 781

## Description

Le domaine de l'invention est celui du contrôle des membranes d'étanchéité des ouvrages, telles que celles des toitures terrasses ou encore des parkings aériens.

Plus précisément, l'invention est notamment relative aux méthodes de recherche de fuites des membranes d'étanchéité par gaz traçable. Les techniques de détection des fuites des membranes d'étanchéité par gaz traçable mettent généralement en oeuvre des méthodes par gaz traceur (repérage de la fuite à l'aide d'un dispositif) ou par fumigène (repérage visuel de la fuite).

Les méthodes par gaz traceur consistent à injecter sous la membrane d'étanchéité un gaz composé par exemple d'azote hydrogéné (95% d'azote et 5% d'hydrogène). Une éventuelle fuite de ce gaz est repérée grâce à un dispositif de détection nommé « renifleur » apte à détecter des sorties d'hydrogène.

Les méthodes par fumigène utilisent un générateur de fumées et du liquide à brouillard ou à fumées. Le fumigène est destiné à être injecté sous la membrane d'étanchéité et à créer une sortie de fumées visuellement détectable lors de la présence d'une fuite.

Ces méthodes de détection de fuites par gaz traçable peuvent être réalisées de différentes manières en fonction du lieu où est réalisée l'investigation.

Tel qu'évoqué précédemment, l'investigation peut être réalisée sur un ouvrage présentant une membrane d'étanchéité, soit par exemple sur une toiture terrasse (végétalisée ou non), ou encore sur un parking (souterrain ou aérien).

Dans le cadre d'une toiture terrasse, la conduite d'une investigation nécessite l'intervention d'un opérateur qui doit monter sur l'ouvrage, au-dessus du complexe d'étanchéité.

Si un matériau est situé au-dessus de la membrane d'étanchéité, alors l'opérateur doit d'abord dégager une voie d'accès à la membrane en évacuant une partie du matériau. Ce matériau peut par exemple être de la terre (toiture terrasse végétalisée), ou des gravillons (toiture terrasse classique).

Dans l'hypothèse où de la pluie est tombée les jours qui ont précédé l'investigation ou le jour même, alors l'opérateur doit évacuer l'eau située au-dessus de la membrane d'étanchéité. Cette évacuation d'eau peut être réalisée à l'aide d'une pompe.

Pour mener à bien son investigation, l'opérateur doit ensuite réaliser une ouverture dans la membrane d'étanchéité. Cette ouverture est classiquement réalisée à l'aide d'un cutter et sert à insérer une conduite d'injection du gaz traçable (une pipette ou un embout de flexible de fumigène) au travers de la membrane d'étanchéité jusque dans l'espace sous l'étanchéité. Il est alors essentiel que l'opérateur soude parfaitement cette conduite sur la membrane pour éviter que le gaz traçable ne ressorte directement au niveau de l'ouverture lors de l'injection du gaz.

Suite au couplage de la conduite à la membrane, l'opérateur peut injecter le gaz traçable sous la membrane d'étanchéité. Cette injection lui permet d'identifier des défauts d'étanchéité de la membrane lors du repérage de fuites du gaz traçable.

Après cette investigation, la réparation des défauts identifiés est réalisée. L'opérateur retire son matériel de l'ouverture pratiquée dans la membrane d'étanchéité, et réalise une dernière réparation de la membrane d'étanchéité sur la localisation où il a pratiqué l'ouverture pour insérer et coupler la conduite.

Cette dernière réparation est réalisée à l'aide d'une rustine à souder ou à coller autour de l'ouverture suivant le type de revêtement.

Enfin, pour conclure son chantier, l'opérateur doit remettre en place les matériaux qui recouvraient initialement la membrane d'étanchéité.

Ces méthodes de l'art antérieur présentent plusieurs inconvénients :
- elles sont « invasives », la membrane d'étanchéité étant découpée autant de fois que des investigations sont menées ;
- il n'existe pas de moyens permettant de savoir si la dernière réparation de la membrane d'étanchéité (au niveau de l'ouverture pratiquée pour insérer la conduite) a été bien réalisée, ceci en vue de vérifier que la membrane d'étanchéité est effectivement étanche à cet endroit ;
- il est impossible de réaliser une ouverture sur la membrane d'étanchéité par temps de pluie, une possibilité d'inondation des étages inférieurs étant fortement probable.

Dans le cas des recherches de fuites des parkings souterrains, ces recherches sont actuellement effectuées par la mise en eau colorée de la membrane d'étanchéité. Cependant cette méthode n'est pas fiable à 100% et un opérateur peut passer à côté de plusieurs origines d'infiltrations.

On peut également remarquer dans l'art antérieur des tests d'étanchéité des bâtiments avant livraison.

Ces tests d'étanchéité sont réalisés par l'intermédiaire d'une mise en eau des toitures terrasse pendant environ 72 heures. Cette méthode présente néanmoins pour inconvénient d'occasionner en cas de fuite une infiltration ne pouvant pas être vue tout de suite : le temps que l'infiltration traverse la dalle béton, l'infiltration peut avoir débuté depuis plusieurs semaines.

Le document DE619711C décrit une installation pour injecter un gaz sous le plancher d'un bâtiment. Le document DE3331486 décrit une installation pour injecter un gaz traceur dans un compartiment isolant situé entre le plafond et le toit plat d'un bâtiment pour détecter des fuites dans le toit. Le document GB2263781 décrit une installation pour détecter des fuites dans des toitures ou des planchers par injection d'un gaz traceur.

L'invention a notamment pour objectif de pallier les inconvénients de l'art antérieur.

Plus précisément, l'invention a pour objectif de proposer une technique de détection de fuites d'une membrane d'étanchéité d'un ouvrage qui soit plus efficace que ce qui est proposé par l'art antérieur, et notamment qui permette de s'assurer de la bonne étanchéité de la membrane d'étanchéité à la fin de l'intervention.

L'invention a également pour objectif de fournir une telle technique qui puisse être réalisée rapidement par l'opérateur qui mène les investigations.

L'invention a encore pour objectif de fournir une telle technique qui soit moins coûteuse et qui puisse être réalisée par tout temps météorologique.

Ces objectifs ainsi que d'autres qui apparaîtront par la suite, sont atteints grâce à l'invention qui a pour objet une installation pour la détection de fuites d'une membrane d'étanchéité d'un ouvrage, la membrane d'étanchéité séparant de manière étanche un espace extérieur d'un espace sous étanchéité, la détection de fuites étant destinée à être réalisée à l'aide d'un dispositif d'émission d'un gaz traçable, l'installation comprenant une conduite d'injection du gaz comprenant :
- une première ouverture débouchant dans l'espace extérieur, la première ouverture étant destinée à être couplée au dispositif d'émission d'un gaz traçable lors de la détection de fuites ;
- au moins une deuxième ouverture débouchant dans l'espace sous étanchéité ;
- une partie intermédiaire, située entre la première ouverture et la deuxième ouverture, couplée de manière étanche à la membrane d'étanchéité,
caractérisée en ce que la conduite d'injection comprend un piétement solidarisé à une partie fixe de l'ouvrage de telle manière que la conduite d'injection soit installée à demeure sur l'ouvrage, la deuxième ouverture étant située entre le piétement et la membrane d'étanchéité, et en ce que la conduite d'injection présente un plateau supérieur situé directement en dessous de la membrane d'étanchéité et au-dessus de la ou les deuxièmes ouvertures, le plateau supérieur s'étendant radialement autour de l'axe central de la partie intermédiaire, le plateau supérieur supportant la membrane d'étanchéité entourant la partie intermédiaire de la conduite d'injection.

Grâce à l'installation selon l'invention, des investigations de recherche de fuites d'une membrane d'étanchéité peuvent être réalisées rapidement et efficacement.

En effet, pour réaliser son investigation de recherche de fuites l'opérateur n'a pas à dégager la membrane d'étanchéité, à pratiquer une ouverture, puis à reboucher l'ouverture et à remettre le matériau situé au-dessus de la membrane d'étanchéité. L'opérateur doit seulement coupler son dispositif d'émission d'un gaz traçable sur la première ouverture de la conduite d'injection du gaz qui est installée à demeure, réaliser son investigation, puis découpler son dispositif d'émission du gaz traçable.

L'investigation menée pour la recherche de fuites est ainsi réalisée de manière plus rapide et plus simple que ce qui est permis par l'art antérieur. En effet, l'opérateur n'a par exemple pas besoin de se munir d'une pelle, d'un cutter, d'une membrane rustine, d'une truelle, d'un chalumeau et d'une pompe pour réaliser des opérations de déblaiements, de dégagement de l'eau située au-dessus de la membrane d'étanchéité, de découpe et de rebouchage de la membrane d'étanchéité.

La détection de fuites réalisée à l'aide de l'installation se révèle également économique après la rentabilisation de l'installation initiale de la conduite d'injection à demeure sur l'ouvrage.

L'installation selon l'invention permet également de réaliser une recherche de fuites sans dégrader la membrane d'étanchéité, permettant ainsi de s'assurer que l'étanchéité est toujours optimale après la réalisation de l'investigation. En effet, l'investigateur n'a pas à reboucher une ouverture pratiquée dans la membrane d'étanchéité pour insérer une pipette ou un embout d'un fumigène sous la membrane. Aussi, l'investigateur n'a pas à réaliser de réparation dont il ne pourrait pas contrôler la parfaite étanchéité.

L'installation selon l'invention permet encore de réaliser des entretiens annuels de toiture terrasse (végétalisée ou non), et de parking souterrain ou aérien. En effet, ces entretiens annuels sont actuellement réalisés de manière visuelle. L'installation selon l'invention permet ainsi de réaliser une investigation annuelle plus précise et à moindre coût.

Ceci est particulièrement appréciable pour les compagnies d'assurance, les syndics de copropriété, les entreprises et les particuliers. Une infiltration par toiture terrasse occasionne à terme beaucoup de dégâts, engendre des coûts colossaux pour la remise en état des logements et peut nuire aux personnes qui résident dans les logements. La réalisation d'un entretien annuel et d'une investigation annuelle qui n'est pas seulement visuelle, se révèle ainsi particulièrement avantageuse.

L'installation selon l'invention permet également la réalisation d'une investigation par tout temps météorologique. En effet, la conduite d'injection du gaz est installée à demeure et ne nécessite pas de retirer de l'eau située au-dessus de la membrane d'étanchéité.

Enfin, l'installation peut être réalisée dès l'origine de la construction d'un bâtiment et permet à un étancheur de mieux garantir la bonne réalisation de son travail lors de la livraison du bâtiment. Plus précisément, un étancheur n'a alors pas besoin de faire une mise en eau sur le toiture terrasse.

Grâce au plateau supérieur, la coopération de la membrane d'étanchéité et de la conduite d'injection est optimisée.

Plus précisément, la partie de la membrane d'étanchéité qui entoure la conduite d'injection et qui est couplée de manière étanche à la partie intermédiaire de la conduite d'injection est alors supportée à une hauteur déterminée par le plateau. La membrane d'étanchéité n'est alors pas suspendue de manière potentiellement hasardeuse ou créatrice de fuite à la partie intermédiaire de la conduite d'injection du gaz. De plus, ce plateau permet d'éloigner, ou de décaler la membrane d'étanchéité de la ou des deuxièmes ouvertures pour permettre le bon passage du gaz traçable lors de la réalisation d'une investigation.

Enfin, la membrane d'étanchéité peut être couplée de manière étanche sur le plateau supérieur. Par exemple, la membrane d'étanchéité peut être collée ou soudée au plateau supérieur.

Ceci permet d'améliorer la liaison entre la conduite d'injection et la membrane d'étanchéité.

Selon une caractéristique avantageuse, la ou les deuxièmes ouvertures sont positionnées directement en dessous de la membrane d'étanchéité.

De cette manière, la diffusion du gaz traçable est réalisée directement en dessous de la membrane d'étanchéité. Le gaz traçable se diffuse et se répand sous la membrane d'étanchéité sans avoir besoin de remonter depuis l'intérieur d'un isolant qui serait situé sous la membrane d'étanchéité. En effet, pour un gaz traceur, il est connu de l'art antérieur que l'introduction d'une pipette au travers d'une ouverture provoque souvent son introduction jusque dans une épaisseur de l'isolant, ce qui retarde la circulation du gaz traceur qui est injecté.

Selon une solution préférentielle, la ou les deuxièmes ouvertures forment des moyens de diffusion radiale d'un gaz traçable répartis autour de la conduite d'injection en dessous de la membrane d'étanchéité.

Selon cette solution, le gaz traçable se répartit de manière homogène tout autour de la conduite d'injection et pas seulement en fonction de la manière dont est insérée la conduite d'injection sous la membrane d'étanchéité.

Plus précisément, lors de la réalisation de l'investigation et de l'injection du gaz traçable, ce dernier va plus aisément se diffuser dans toutes les directions autour de la conduite d'injection sous la membrane d'étanchéité.

Selon un mode de réalisation préférentiel de l'invention, le plateau supérieur est muni d'un organe de protection destiné à protéger la membrane d'étanchéité.

Grâce à ce mode de réalisation, la présence du plateau ne risque pas de créer une fuite d'étanchéité. Par exemple, si le plateau est réalisé en métal et qu'il présente une arête coupante susceptible de provoquer une découpe de la membrane d'étanchéité, alors l'organe de protection permet d'éviter un tel accident.

Avantageusement, la partie intermédiaire présente une zone de couplage à la membrane d'étanchéité, la zone de couplage s'étendant le long de la partie intermédiaire sur une hauteur comprise entre 5cm et 40 cm, la membrane d'étanchéité étant couplée de manière étanche à la partie intermédiaire sur toute la hauteur de la zone de couplage.

Ainsi, le couplage étanche de la membrane d'étanchéité à la partie intermédiaire est réalisée de manière particulièrement pérenne dans le temps. En effet, il ne s'agit pas d'un simple couplage étanche tel que cela pourrait être réalisé entre la membrane d'étanchéité et une pipette classique lors d'une investigation selon l'art antérieur.

Selon une caractéristique avantageuse, la conduite d'injection comprend une vanne située entre la première ouverture et la ou les deuxièmes ouvertures, la vanne étant apte à empêcher le passage de fluides dans la conduite d'injection.

Une telle vanne permet d'obturer la conduite d'injection en dehors de la réalisation d'une investigation. Cette vanne permet ainsi d'éviter que des fluides étrangers pénètrent dans l'espace sous l'étanchéité.

Cette vanne permet également de s'assurer que le couplage d'un dispositif d'émission d'un gaz traçable sur la première ouverture est étanche, et évite de provoquer un résultat faux positif lors de l'utilisation d'un dispositif de détection du gaz traçable.

Plus précisément, le dispositif d'émission d'un gaz traçable doit d'abord être couplé sur la première ouverture de la conduite d'injection du gaz. Suite à ce couplage, l'opérateur s'assure que la vanne est fermée puis actionne son dispositif d'émission d'un gaz traçable pour mettre en charge la partie de la conduite d'injection du gaz située entre la première ouverture et la vanne. Cette mise en charge ne doit pas provoquer la sortie du gaz traçable et un dispositif de détection du gaz traçable ne doit pas repérer de fuites. La présence d'une telle fuite amènerait l'investigateur à vérifier le couplage de son dispositif d'émission d'un gaz traçable à la première ouverture de la conduite d'injection.

Une fois que l'opérateur est assuré que le dispositif d'émission d'un gaz traçable est couplé de manière parfaitement étanche à la première ouverture et qu'il n'y a pas de fuite à ce niveau, alors il peut ouvrir la vanne pour continuer l'investigation.

Lors de l'investigation, s'il repère une fuite à l'aide de son dispositif de détection, il a alors l'assurance que cette fuite n'a pas pour origine la liaison entre son dispositif d'émission et la première ouverture de la conduite d'injection.

Préférentiellement, l'installation comprend :
- un fourreau couplé à la partie fixe de l'ouvrage, le piétement étant solidarisé à la partie fixe de l'ouvrage en étant inséré dans le fourreau ;
- des moyens de maintien en position du piétement à l'intérieur du fourreau.

Une telle conception de l'installation permet de changer la conduite d'injection dans le cas où cela est nécessaire, la nouvelle conduite d'injection devant simplement être insérée dans l'ancien fourreau couplé à demeure à la partie fixe de l'ouvrage.

L'invention a également pour objet un ensemble pour la détection de fuites d'une membrane d'étanchéité d'un ouvrage, la membrane d'étanchéité séparant de manière étanche un espace extérieur d'un espace sous étanchéité, l'ensemble comprenant :
- un dispositif d'émission d'un gaz traçable présentant un embout d'éjection du gaz traçable ;
- une conduite d'injection du gaz comprenant :
   - une première ouverture destinée à déboucher dans l'espace extérieur, la première ouverture étant destinée à être couplée au dispositif d'émission d'un gaz traçable lors de la détection de fuites ;
   - au moins une deuxième ouverture destinée à déboucher dans l'espace sous étanchéité ;
   - une partie intermédiaire, située entre la première ouverture et la deuxième ouverture, la partie intermédiaire étant destinée à être couplée de manière étanche à la membrane d'étanchéité,
caractérisé en ce que la conduite d'injection comprend un piétement à solidariser à une partie fixe de l'ouvrage de telle manière que la conduite d'injection soit installée à demeure sur l'ouvrage, la deuxième ouverture étant située entre le piétement et la partie intermédiaire, et en ce que la conduite d'injection présente un plateau supérieur destiné à être situé directement en dessous de la membrane d'étanchéité et au-dessus de la ou les deuxièmes ouvertures, le plateau supérieur s'étendant radialement autour de l'axe central de la partie intermédiaire, le plateau supérieur étant destiné à supporter la membrane d'étanchéité entourant la partie intermédiaire de la conduite d'injection, et en ce que l'embout d'éjection du dispositif d'émission présente des moyens d'assemblage étanche et de désassemblage avec la première ouverture de la conduite d'injection.

Grâce à un tel ensemble, un investigateur peut réaliser de multiples opérations d'investigations de recherche de fuites d'étanchéité sur un ouvrage sur lequel il aura installé à demeure la conduite d'injection du gaz, sans ce que ces investigations ne soient destructrices et ne nécessitent à chaque fois de réaliser une découpe et une réparation de la membrane d'étanchéité testée.

D'autres caractéristiques et avantages de l'invention apparaîtront plus clairement à la lecture de la description suivante de modes de réalisations préférentiels de l'invention, donnés à titres d'exemples illustratifs et non limitatifs, et des dessins annexés parmi lesquels :
- la figure 1 est une représentation schématique d'un premier mode de réalisation de l'installation selon l'invention ;
- la figure 2 est une représentation schématique d'un second mode de réalisation de l'installation et de l'ensemble selon l'invention, un dispositif d'émission d'un gaz traçable étant amené en vis-à-vis de la première ouverture de la conduite d'injection ;
- la figure 3 est une représentation schématique d'un troisième mode de réalisation de l'installation selon l'invention, dans lequel la conduite d'injection du gaz présente une pluralité de deuxièmes ouvertures réparties en hauteur sur la conduite d'injection, en dessous de la membrane d'étanchéité.

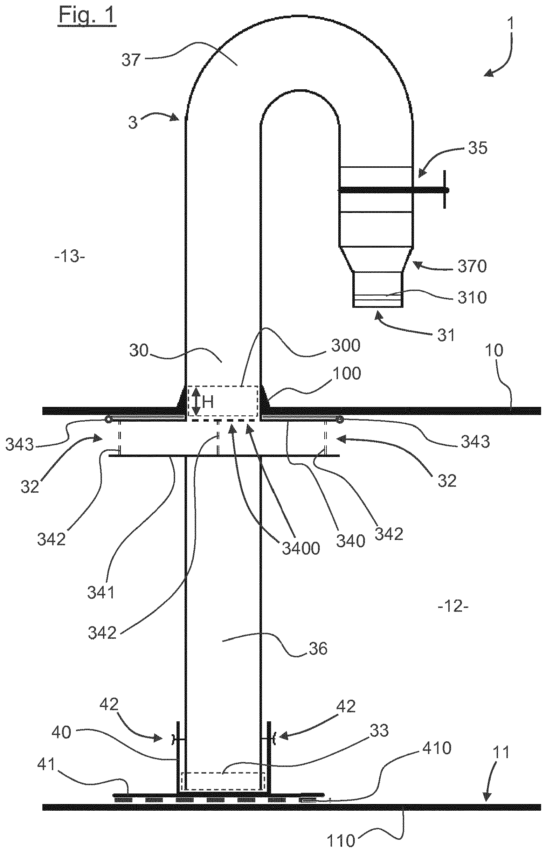

En référence aux figures 1 à 3, l'installation 1 selon l'invention est conçue pour permettre la détection de fuites d'une membrane d'étanchéité 10 d'un ouvrage.

L'ouvrage peut par exemple être une habitation présentant une toiture terrasse sur laquelle est posée la membrane d'étanchéité 10.

L'ouvrage présente une partie fixe 11 située sous la membrane d'étanchéité 10.

La partie fixe 11 est plus précisément une dalle 110 en béton.

La membrane d'étanchéité 10 sépare de manière étanche un espace extérieur 13 situé au-dessus de la membrane d'étanchéité 10 d'un espace sous étanchéité 12 situé entre la membrane d'étanchéité 10 et la dalle 110.

La détection de fuites de la membrane d'étanchéité 10 est destinée à être réalisée par le biais d'une injection d'un gaz traçable en dessous de la membrane d'étanchéité 10.

A cet effet, l'installation 1 selon l'invention est compatible avec un dispositif d'émission 2 d'un gaz traçable.

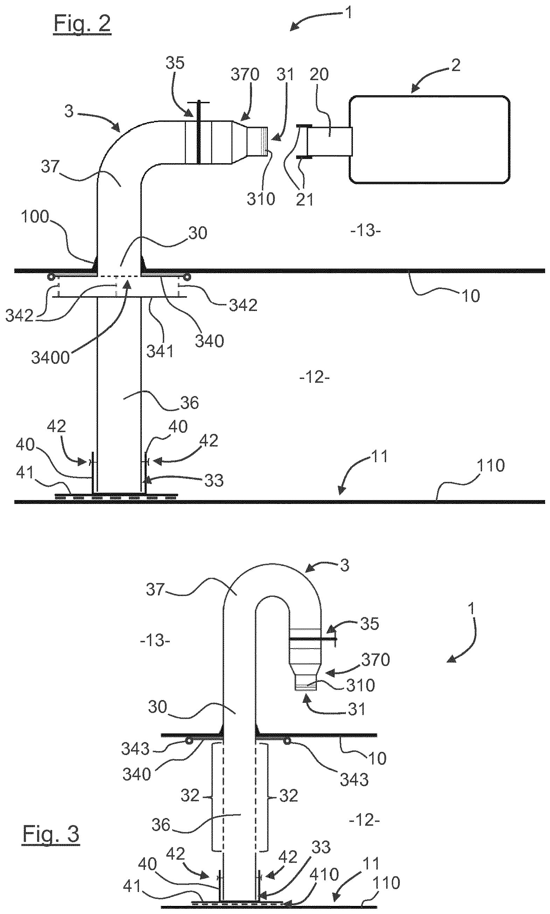

En référence à la figure 2, l'ensemble pour la détection de fuites d'une membrane d'étanchéité, selon l'invention, comprend un tel dispositif d'émission 2 d'un gaz traçable.

En référence aux figures 1 à 3, l'installation 1 et l'ensemble selon l'invention, comprennent une conduite d'injection 3 de gaz pour pouvoir acheminer le gaz du dispositif d'émission 2 d'un gaz traçable, depuis l'espace extérieur 13, jusqu'à l'espace sous étanchéité 12, en dessous de la membrane d'étanchéité 10.

La conduite d'injection du gaz 3 comprend à cet effet :
- une première ouverture 31 qui débouche dans l'espace extérieur 13 ;
- au moins une deuxième ouverture 32 qui débouche dans l'espace sous étanchéité 12.

La première ouverture 31 est destinée à être couplée au dispositif d'émission 2 d'un gaz traçable pour la réalisation de la détection d'une fuite sur la membrane d'étanchéité 10.

La deuxième ouverture 32 est destinée à laisser diffuser le gaz traçable en provenance du dispositif d'émission 2, dans l'espace sous étanchéité 12, suite à son passage dans la conduite d'injection 3.

La conduite d'injection 3 du gaz comprend également une partie intermédiaire 30 qui est située entre la première ouverture 31 et la deuxième ouverture 32. Cette partie intermédiaire est couplée de manière étanche à la membrane d'étanchéité 10.

Plus précisément et tel qu'illustré par la figure 1, la partie intermédiaire 30 présente une zone de couplage 300 à la membrane d'étanchéité 10.

Cette zone de couplage 300 s'étend le long de la partie intermédiaire 30 de la conduite d'injection 3 sur une hauteur H. La hauteur H est de préférence comprise entre 5cm et 40cm.

La membrane d'étanchéité 10 forme un manchon 100 remontant le long de la conduite d'injection 3 sur sa partie intermédiaire 30, sur toute la hauteur de la zone de couplage 300.

La membrane d'étanchéité 10 est ainsi couplée de manière étanche à la partie intermédiaire 30 sur toute la hauteur H de la zone de couplage 300. La membrane d'étanchéité 10 est plus précisément soudée ou collée sur la zone de couplage, en fonction du type de la membrane d'étanchéité 10.

Selon le principe de l'invention, la conduite d'injection 3 est installée à demeure sur l'ouvrage. A cet effet, la conduite d'injection 3 comprend un piétement 33 qui est solidarisé à la partie fixe 11 de l'ouvrage.

Le piétement 33 est notamment solidarisé à la dalle 110.

En référence aux figures 1 à 3, le piétement 33 de la conduite d'injection 3 est solidarisé à la partie fixe 11 de l'ouvrage par l'intermédiaire d'un fourreau 40.

En effet, l'installation 1 selon l'invention comprend :
- un fourreau 40 couplé à la partie fixe 11 de l'ouvrage, et plus précisément à la dalle 110 de l'ouvrage ;
- des moyens de maintien en position 42 du piétement 33 à l'intérieur du fourreau 40.

Le fourreau 40 s'étend depuis une platine 41 fixée sur la dalle 110 par collage par exemple. La platine 41 est notamment collée à l'aide d'un mastic colle 410.

Les moyens de maintien en position 42 du piétement à l'intérieur du fourreau peuvent notamment être des boulons de serrage.

Tel qu'illustré par les figures 1 à 3, la deuxième ouverture 32 est située entre le piètement 33 et la membrane d'étanchéité 10, ou en d'autres termes entre le piétement 33 et la partie intermédiaire 30.

Selon les présents modes de réalisation, la conduite d'injection 3 du gaz présente :
- la partie intermédiaire 30 destinée à être couplée de manière étanche à la membrane d'étanchéité 10 ;
- une partie haute 37 s'étendant à partir de la partie intermédiaire 30, et présentant la première ouverture 31, la partie haute 37 étant destinée à être située dans l'espace extérieur 13 ;
- une partie basse 36, s'étendant à partir de la partie intermédiaire 30 de manière opposée à la partie haute 37, la partie basse 36 étant destinée à être située dans l'espace sous étanchéité 12.

La partie basse 36 présente la ou les deuxièmes ouvertures 32.

La partie basse 36 de la conduite d'injection 3 peut présenter une hauteur d'environ 1 m et la partie haute 37 de la conduite d'injection 3 peut présenter une hauteur suffisante pour faire émerger la première ouverture 31 depuis la terre et la végétation d'une toiture terrasse végétalisée. Par exemple, la terre peut présenter une hauteur de 30 cm et la partie haute 37 de la conduite d'injection 3 peut présenter une hauteur totale de 60 cm. De cette manière, la partie haute 37 émerge de la terre sur une hauteur de 30 cm.

Selon le mode de réalisation illustré par la figure 3, les deuxièmes ouvertures 32 sont réparties en hauteur le long de la partie basse 36 de la conduite d'injection 3.

Au contraire, selon les modes de réalisation préférentiels illustrés par les figures 1 et 2, les deuxièmes ouvertures 32 sont positionnées directement en dessous de la membrane d'étanchéité 10.

Plus précisément, selon les modes de réalisation illustrés par les figures 1 et 2, la conduite d'injection 3 présente un plateau supérieur 340 qui est situé directement en dessous de la membrane d'étanchéité 10 et juste au-dessus des deuxièmes ouvertures 32. Ce plateau supérieur 32 est décrit plus en détail par la suite.

En référence aux figures 1 à 3, les deuxièmes ouvertures 32 forment des moyens de diffusion radiale du gaz traçable.

Ces moyens de diffusion radiale du gaz traçable sont répartis autour de la conduite d'injection 3, en dessous de la membrane d'étanchéité 10.

Plus précisément, les moyens de diffusion radiale du gaz sont répartis autour d'un axe central de la partie basse 36 de la conduite d'injection 3. En d'autres termes, les moyens de diffusion radiale sont répartis en périphérie de la partie basse 36 de la conduite d'injection 3.

Tel qu'illustré par les figures 1 à 3, le plateau supérieur 340 s'étend radialement autour de l'axe central de la partie intermédiaire 30 de la membrane d'étanchéité 10, et/ou autour de l'axe central de la partie basse 36 (l'axe central de ces deux parties étant confondu).

Le plateau supérieur 340 supporte la membrane d"étanchéité 10 qui entoure la partie intermédiaire 30 de la conduite d'injection 3.

Selon les présents modes de réalisation illustrés par les figures 1 à 3, le plateau supérieur 340 est muni d'un organe de protection 343 destiné à protéger la membrane d'étanchéité 10.

L'organe de protection 343 est notamment formé par un joint de protection caoutchouc assemblé sur la périphérie du plateau supérieur 340.

La membrane d'étanchéité 10 est avantageusement couplée de manière étanche sur le plateau supérieur 340. Bien entendu, la membrane d'étanchéité 10 n'est pas couplée sur le plateau supérieur 340 au niveau de l'organe de protection 343.

En référence aux modes de réalisations illustrés par les figures 1 et 2, la conduite d'injection 3 comprend également un plateau inférieur 341 qui est couplé et espacé du plateau supérieur 340 par l'intermédiaire d'entretoises 342.

Le plateau supérieur 340 présente au moins une perforation centrale 3400 permettant le passage du gaz depuis la partie intermédiaire 30 jusqu'à l'espace situé entre le plateau supérieur 340 et le plateau inférieur 341. Préférentiellement, le plateau supérieure 340 présente une unique perforation centrale 3400 d'un diamètre égale à ce celui du diamètre interne de la conduite d'injection 3 au niveau de la partie intermédiaire 30.

Les périphéries externes du plateau supérieur 340 et du plateau inférieur 341 forment entre-elles une deuxième ouverture 32. Cette deuxième ouverture 32 permet une diffusion radiale du gaz traçable autour de la conduite d'injection 3, depuis l'espace situé entre le plateau supérieure 340 et le plateau inférieur 341, et directement en dessous de la membrane d'étanchéité 10.

En référence aux figures 1 à 3, la partie haute 37 de la conduite d'injection 3 s'étend depuis la partie intermédiaire 30 jusqu'à la première ouverture 31.

La première ouverture 31 est formée par un embout fileté 310.

Tel qu'illustré par les figures, la conduite d'injection 3 comprend une vanne 35.

La vanne 35 est située entre la première ouverture 31 et les deuxièmes ouvertures 32. Plus précisément, la vanne 35 est située sur la partie haute 37 de la conduite d'injection 3, à proximité de la première ouverture 31.

Cette vanne 35 est apte à empêcher le passage de fluides (gaz ou liquide) dans la conduite d'injection 3.

En référence à la figure 2, le dispositif d'émission 2 de gaz traçable présente un embout d'éjection 20 du gaz traçable.

Cet embout d'éjection 20 présente des moyens d'assemblage étanches et de désassemblage 21 avec la première ouverture 31 de la conduite d'injection 3.

Ces moyens d'assemblage étanches et de désassemblage 21 peuvent plus précisément être vissés sur l'embout fileté 310 de la conduite d'injection 3 de manière à établir une liaison étanche.

Le couplage du dispositif d'émission 2 à la première ouverture 31 de la conduite d'injection 3 et le déclenchement du dispositif d'émission 2 alors que la vanne 35 est fermée permet de s'assurer de la bonne étanchéité de la liaison à l'aide d'un dispositif de détection d'un gaz traçable, ou à l'aide d'un contrôle visuel dans le cas où le gaz traçable est un fumigène coloré.

En référence aux figures 1 à 3, la partie haute 37 de la conduite d'injection 3 présente une réduction 370 permettant d'adapter le diamètre de la conduite d'injection 3.

Avantageusement, la conduite d'injection 3 est réalisée en métal et plus avantageusement en un métal inoxydable. A titre indicatif, la conduite d'injection 3 est réalisée en inox 316 L.

Un tel matériau permet à la conduite d'injection 3 de présenter une durée de vie importante.

## Revendications

1. Installation (1) pour la détection de fuites d'une membrane d'étanchéité (10) d'un ouvrage, la membrane d'étanchéité séparant de manière étanche un espace extérieur (13) d'un espace sous étanchéité (12), la détection de fuites étant destinée à être réalisée à l'aide d'un dispositif d'émission (2) d'un gaz traçable, l'installation comprenant une conduite d'injection (3) du gaz comprenant :
- une première ouverture (31) débouchant dans l'espace extérieur, la première ouverture étant destinée à être couplée au dispositif d'émission d'un gaz traçable lors de la détection de fuites ;
- au moins une deuxième ouverture (32) débouchant dans l'espace sous étanchéité ;
- une partie intermédiaire (30), située entre la première ouverture et la deuxième ouverture, couplée de manière étanche à la membrane d'étanchéité,
**caractérisée en ce que** la conduite d'injection comprend un piétement (33) solidarisé à une partie fixe (11) de l'ouvrage de telle manière que la conduite d'injection soit installée à demeure sur l'ouvrage, la deuxième ouverture étant située entre le piétement et la membrane d'étanchéité,
et **en ce que** la conduite d'injection (3) présente un plateau supérieur (340) situé directement en dessous de la membrane d'étanchéité (10) et au-dessus de la ou les deuxièmes ouvertures (32), le plateau supérieur s'étendant radialement autour de l'axe central de la partie intermédiaire (30), le plateau supérieur supportant la membrane d'étanchéité (10) entourant la partie intermédiaire de la conduite d'injection.

2. Installation (1) selon la revendication précédente, **caractérisée en ce que** la ou les deuxièmes ouvertures (32) sont positionnées directement en dessous de la membrane d'étanchéité (10).

3. Installation (1) selon l'une quelconque des revendications précédentes, **caractérisée en ce que** la ou les deuxièmes ouvertures (32) forment des moyens de diffusion radiale d'un gaz traçable répartis autour de la conduite d'injection (3) en dessous de la membrane d'étanchéité (10).

4. Installation (1) selon l'une quelconque des revendications précédentes, **caractérisée en ce que** le plateau supérieur (340) est muni d'un organe de protection (343) destiné à protéger la membrane d'étanchéité (10).

5. Installation (1) selon l'une quelconque des revendications précédentes, **caractérisée en ce que** la partie intermédiaire (30) présente une zone de couplage (300) à la membrane d'étanchéité (10), la zone de couplage s'étendant le long de la partie intermédiaire sur une hauteur H comprise entre 5cm et 40 cm, la membrane d'étanchéité étant couplée de manière étanche à la partie intermédiaire sur toute la hauteur de la zone de couplage.

6. Installation (1) selon l'une quelconque des revendications précédentes, **caractérisée en ce que** la conduite d'injection (3) comprend une vanne (35) située entre la première ouverture (31) et la ou les deuxièmes ouvertures (32), la vanne étant apte à empêcher le passage de fluides dans la conduite d'injection.

7. Installation (1) selon l'une quelconque des revendications précédentes, **caractérisée en ce qu'**elle comprend :
- un fourreau (40) couplé à la partie fixe (11) de l'ouvrage, le piétement (33) étant solidarisé à la partie fixe de l'ouvrage en étant inséré dans le fourreau ;
- des moyens de maintien en position (42) du piétement à l'intérieur du fourreau.

8. Ensemble pour la détection de fuites d'une membrane d'étanchéité (10) d'un ouvrage, la membrane d'étanchéité séparant de manière étanche un espace extérieur (13) d'un espace sous étanchéité (12), l'ensemble comprenant :
- un dispositif d'émission (2) d'un gaz traçable présentant un embout d'éjection (20) du gaz traçable ;
- une conduite d'injection (3) du gaz comprenant :
- une première ouverture (31) destinée à déboucher dans l'espace extérieur, la première ouverture étant destinée à être couplée au dispositif d'émission d'un gaz traçable lors de la détection de fuites ;
- au moins une deuxième ouverture (32) destinée à déboucher dans l'espace sous étanchéité ;
- une partie intermédiaire (30), située entre la première ouverture et la deuxième ouverture, la partie intermédiaire étant destinée à être couplée de manière étanche à la membrane d'étanchéité,
**caractérisé en ce que** la conduite d'injection comprend un piétement (33) à solidariser à une partie fixe (11) de l'ouvrage de telle manière que la conduite d'injection soit installée à demeure sur l'ouvrage, la deuxième ouverture étant située entre le piétement et la partie intermédiaire,
et **en ce que** la conduite d'injection (3) présente un plateau supérieur (340) destiné à être situé directement en dessous de la membrane d'étanchéité (10) et au-dessus de la ou les deuxièmes ouvertures (32), le plateau supérieur s'étendant radialement autour de l'axe central de la partie intermédiaire (30), le plateau supérieur étant destiné à supporter la membrane d'étanchéité (10) entourant la partie intermédiaire de la conduite d'injection,
et **en ce que** l'embout d'éjection du dispositif d'émission présente des moyens d'assemblage étanche et de désassemblage (21) avec la première ouverture de la conduite d'injection.

## Patentansprüche

1. Installation (1) zur Detektion von Undichtigkeiten einer Abdichtungsmembran (10) eines Bauwerks, wobei die Abdichtungsmembran einen Außenraum (13) dicht von einem abgedichteten Raum (12) trennt, wobei die Detektion von Undichtigkeiten vorgesehen ist, mit Hilfe einer Vorrichtung zum Ausströmen (2) eines Gases ausgeführt zu werden, das aufgespürt werden kann, wobei die Installation eine Leitung zum Einleiten (3) des Gases umfasst, welche umfasst:
- eine erste Öffnung (31), die im Außenraum mündet, wobei die erste Öffnung dazu vorgesehen ist, bei der Detektion von Undichtigkeiten mit der Vorrichtung zum Ausströmen eines aufspürbaren Gases gekoppelt zu werden;
- mindestens eine zweite Öffnung (32), die im abgedichteten Raum mündet;
- einen zwischen der ersten Öffnung und der zweiten Öffnung liegenden Zwischenteil (30), der dicht mit der Abdichtungsmembran gekoppelt ist,
**dadurch gekennzeichnet, dass** die Einleitungsleitung ein Fußgestell (33) umfasst, das fest mit einem feststehenden Teil (11) des Bauwerks verbunden ist, sodass die Einleitungsleitung dauerhaft am Bauwerk installiert ist, wobei die zweite Öffnung zwischen dem Fußgestell und der Abdichtungsmembran liegt,
und dadurch, dass die Einleitungsleitung (3) eine obere Platte (340) aufweist, die direkt unter der Abdichtungsmembran (10) und über der oder den zweiten Öffnungen (32) liegt, wobei sich die obere Platte radial um die Mittelachse des Zwischenteils (30) erstreckt, wobei die obere Platte, die die Abdichtungsmembran (10) abstützt, den Zwischenteil der Einleitungsleitung umgibt.

2. Installation (1) nach dem vorstehenden Anspruch, **dadurch gekennzeichnet, dass** die zweite(n) Öffnung(en) (32) direkt unter der Abdichtungsmembran (10) positioniert sind.

3. Installation (1) nach einem der vorstehenden Ansprüche, **dadurch gekennzeichnet, dass** die zweite(n) Öffnung(en) (32) Mittel zur radialen Ausbreitung eines aufspürbaren Gases bilden, die unter der Abdichtungsmembran (10) um die Einleitungsleitung (3) verteilt sind.

4. Installation (1) nach einem der vorstehenden Ansprüche, **dadurch gekennzeichnet, dass** die obere Platte (340) mit einem Schutzelement (343) ausgestattet ist, das dazu vorgesehen ist, die Abdichtungsmembran (10) zu schützen.

5. Installation (1) nach einem der vorstehenden Ansprüche, **dadurch gekennzeichnet, dass** der Zwischenteil (30) einen Abschnitt zum Koppeln (300) mit der Abdichtungsmembran (10) aufweist, wobei sich der Kopplungsabschnitt entlang des Zwischenteils auf einer Höhe H im Bereich zwischen 5 cm und 40 cm erstreckt, wobei die Abdichtungsmembran auf der gesamten Höhe des Kopplungsabschnitts dicht mit dem Zwischenteil gekoppelt ist.

6. Installation (1) nach einem der vorstehenden Ansprüche, **dadurch gekennzeichnet, dass** die Einleitungsleitung (3) ein Ventil (35) umfasst, das zwischen der ersten Öffnung (31) und der oder den zweiten Öffnungen (32) liegt, wobei das Ventil in der Lage ist, den Eintritt von Fluiden in die Einleitungsleitung zu verhindern.

7. Installation (1) nach einem der vorstehenden Ansprüche, **dadurch gekennzeichnet, dass** sie umfasst:
- eine Buchse (40), die mit dem feststehenden Teil (11) des Bauwerks gekoppelt ist, wobei das Fußgestell (33) fest mit dem feststehenden Teil des Bauwerks verbunden ist, indem sie in die Buchse eingeschoben ist;
- Mittel zum Halten der Position (42) des Fußgestells im Inneren der Buchse.

8. Baugruppe zur Detektion von Undichtigkeiten einer Abdichtungsmembran (10) eines Bauwerks, wobei die Abdichtungsmembran einen Außenraum (13) dicht von einem abgedichteten Raum (12) trennt, wobei die Baugruppe umfasst:
- eine Vorrichtung zum Ausströmen (2) eines aufspürbaren Gases, die ein Endstück (20) zum Ausgeben des aufspürbaren Gases aufweist;
- eine Leitung zum Einleiten (3) des Gases, welche umfasst:
- eine erste Öffnung (31), die dazu vorgesehen ist, im Außenraum zu münden, wobei die erste Öffnung dazu vorgesehen ist, bei der Detektion von Undichtigkeiten mit der Vorrichtung zum Ausströmen eines aufspürbaren Gases gekoppelt zu werden;
- mindestens eine zweite Öffnung (32), die dazu vorgesehen ist, im abgedichteten Raum zu münden;
- einen zwischen der ersten Öffnung und der zweiten Öffnung liegenden Zwischenteil (30), wobei der Zwischenteil dazu vorgesehen ist, dicht mit der Abdichtungsmembran gekoppelt zu werden,
**dadurch gekennzeichnet, dass** die Einleitungsleitung ein Fußgestell (33) umfasst, das fest mit einem feststehenden Teil (11) des Bauwerks zu verbinden ist, sodass die Einleitungsleitung dauerhaft am Bauwerk installiert wird, wobei die zweite Öffnung zwischen dem Fußgestell und dem Zwischenteil liegt,
und dadurch, dass die Einleitungsleitung (3) eine obere Platte (340) aufweist, die dazu vorgesehen ist, direkt unter der Abdichtungsmembran (10) und über der oder den zweiten Öffnungen (32) zu liegen, wobei sich die obere Platte radial um die Mittelachse des Zwischenteils (30) erstreckt, wobei die obere Platte, die dazu vorgesehen ist, die Abdichtungsmembran (10) abzustützen, den Zwischenteil der Einleitungsleitung umgibt,
und dadurch, dass das Ausgabeendstück der Ausströmvorrichtung Mittel zum dichten Anbauen und Abbauen (21) an die/von der erste(n) Öffnung der Einleitungsleitung aufweist.

## Claims

1. Installation (1) for detecting leaks from a sealing membrane (10) of a structure, the sealing membrane separating in a sealed manner an exterior space (13) from a space under sealing (12), the detection of leaks being intended to be carried out using a device for emitting (2) a traceable gas, the installation comprising a pipe for injecting (3) gas comprising:
- a first opening (31) exiting into the exterior space, the first opening being intended to be coupled to the device for emitting a traceable gas during the detection of leaks;
- at least one second opening (32) exiting into the space under sealing;
- an intermediate part (30), located between the first opening and the second opening, coupled in a sealed manner to the sealing membrane,
**characterised in that** the injection pipe comprises a stand (33) engaged with a fixed portion (11) of the structure in such a way that the injection pipe is permanently installed on the structure, the second opening being located between the stand and the sealing membrane,
and **in that** the injection pipe (3) has an upper plateau (340) located directly below the sealing membrane (10) and above the second opening or openings (32), the upper plateau extending radially about the central axis of the intermediate part (30), the upper plateau supporting the sealing membrane (10) surrounding the intermediate part of the injection pipe.

2. Installation (1) according to the preceding claim, **characterised in that** the second opening or openings (32) are positioned directly below the sealing membrane (10).

3. Installation (1) according to any preceding claim, **characterised in that** the second opening or openings (32) form means of radial diffusion of a traceable gas distributed around the injection pipe (3) below the sealing membrane (10).

4. Installation (1) according to any preceding claim, **characterised in that** the upper plateau (340) is provided with a protective member (343) intended to protect the sealing membrane (10).

5. Installation (1) according to any preceding claim, **characterised in that** the intermediate part (30) has a zone for coupling (300) to the sealing membrane (10), the coupling zone extending along the intermediate part over a height H comprised between 5 cm and 40 cm, the sealing membrane being coupled in a sealed manner to the intermediate part over the entire height of the coupling zone.

6. Installation (1) according to any preceding claim, **characterised in that** the injection pipe (3) comprises a valve (35) located between the first opening (31) and the second opening or openings (32), the valve being able to prevent the passage of fluids into the injection pipe.

7. Installation (1) according to any preceding claim, **characterised in that** it comprises:
- a sheath (40) coupled to the fixed portion (11) of the structure, the stand (33) being engaged with the fixed portion of the structure and being inserted into the sheath;
- means for maintaining (42) the stand in position inside the sheath.

8. Assembly for detecting leaks from a sealing membrane (10) of a structure, the sealing membrane separating in a sealed manner an exterior space (13) from a space under sealing (12), the assembly comprising:
- a device for emitting (2) a traceable gas that has a nozzle for ejecting (20) traceable gas;
- a pipe for injecting (3) gas comprising:
- a first opening (31) intended to exit into the exterior space, the first opening being intended to be coupled to the device for emitting a traceable gas during the detection of leaks;
- at least one second opening (32) intended to exit into the space under sealing;
- an intermediate part (30), located between the first opening and the second opening, the intermediate part being intended to be coupled in a sealed manner to the sealing membrane,
**characterised in that** the injection pipe comprises a stand (33) to be engaged with a fixed portion (11) of the structure in such a way that the injection pipe is permanently installed on the structure, the second opening being located between the stand and the intermediate part,
and **in that** the injection pipe (3) has an upper plateau (340) intended to be located directly below the sealing membrane (10) and above the second opening or openings (32), the upper plateau extending radially about the central axis of the intermediate part (30), the upper plateau being intended to support the sealing membrane (10) surrounding the intermediate part of the injection pipe,
and **in that** the ejection nozzle of the emission device has means for the sealed assembly and disassembly (21) with the first opening of the injection pipe.
